Europäisches Patentamt

European Patent Office

Office européen des brevets

(19)

(11) Numéro de publication : **0 348 320 B1**

(12)

# FASCICULE DE BREVET EUROPEEN

(45) Date de publication du fascicule du brevet :
**16.08.95 Bulletin 95/33**

(51) Int. Cl.⁶ : **G06T 7/20, H04N 7/32**

(21) Numéro de dépôt : **89460018.8**

(22) Date de dépôt : **22.06.89**

(54) **Procédé de segmentation d'images électroniques animées, sur critère de mouvement de blocs d'image, utilisant un procédé de détection de contours.**

(30) Priorité : **23.06.88 FR 8808626**

(43) Date de publication de la demande :
**27.12.89 Bulletin 89/52**

(45) Mention de la délivrance du brevet :
**16.08.95 Bulletin 95/33**

(84) Etats contractants désignés :
**DE GB IT NL**

(56) Documents cités :
**FR-A- 2 538 653**
**FR-A- 2 549 329**
**8TH INTERNATIONAL CONFERENCE ON PAT-
TERN RECOGNITION, Paris, 27-31 octobre
1986, pages 651-653, IEEE, New York, US; P.
BOUTHEMY: "A method of integrating motion
information along contours including segmentation"**

(73) Titulaire : **FRANCE TELECOM**
**6, Place d'Alleray**
**F-75015 Paris (FR)**
Titulaire : **TELEDIFFUSION DE FRANCE S.A.**
**21-27, rue Barbès**
**F-92542 Montrouge Cédex (FR)**

(72) Inventeur : **Choquet, Bruno**
**27 Allée Jean-Sébastien Bach**
**F-35000 Rennes (FR)**
Inventeur : **Pele, Danièle**
**11 avenue du Mail**
**F-35000 Rennes (FR)**

(74) Mandataire : **Corlau, Vincent**
**c/o Cabinet Vidon,**
**Immeuble Germanium,**
**80 avenue des Buttes de Coesmes**
**F-35700 Rennes (FR)**

## Description

Le domaine de l'invention est celui de l'analyse et du codage de séquences d'images électroniques, et plus particulièrement de l'analyse du mouvement des points de telles images électroniques.

Dans un cas spécifique qui sera détaillé ci-après, le procédé suivant l'invention s'applique à l'analyse de séquences d'images en haute définition destinées à être transmises à travers un canal à débit limité. Une application préférentielle de ce type est la transmission de télévision haute définition sur canal MAC.

Toutefois, le procédé de l'invention peut aussi bien être utilisé dans tout système analysant une séquence d'images (robotique, suivi de cibles, recherche de paramètres spatiaux et/ou temporels,...) ou une séquence d'ensembles de données (applications médicales, météorologiques,...).

Le procédé suivant l'invention est destiné à s'inscrire dans une chaîne de traitement d'images, et à constituer un maillon d'analyse des vitesses de déplacement des points d'image dans le plan d'image, afin notamment de détecter et valider l'existence de contours, ou encore frontières d'objets, en déplacement dans l'image. Une application préférentielle d'un tel procédé de détection de contours est notamment de permettre le regroupement de points au sein de blocs de points à déplacement homogène, selon une opération dite de "segmentation".

Une telle analyse présente de très nombreux intérêts.

Dans le cas de la transmission de séquences d' images HD dans un canal à débit limité, le traitement d'images a pour objet de réduire le volume d'informations transmises, de telle façon que :

- à l'émission, on procède à une opération de sous-échantillonnage d'une image HD, les données sous-échantillonnées étant accompagnées de "données d'assistance" transmises conjointement dans le canal de données ;
- à la réception, on effectue une opération inverse consistant à utiliser les données d'assistance et le signal sous-échantillonné dans une opération d'interpolation et de compensation pour restituer un signal haute définition.

Le cas échéant, le signal sous-échantillonné peut être visualisé tel quel sur un poste de télévision conventionnel.

Dans ce type d'application, l'étape de segmentation de l'image en blocs de points présentant des vitesses de déplacement relativement homogènes, selon la présente invention, intervient par exemple préalablement à l'opération de sous-échantillonnage à l'émission.

La segmentation de l'image s'inscrit ainsi avantageusement entre une opération préalable d'estimation de mouvement des points d'images, et une opération de compression des données d'images.

L'opération d'estimation de mouvement a pour objectif de créer une base de données spatio-temporelle, dont les données sont représentatives de l'activité de mouvement des points, dans le plan d'image, et dans le temps.

L'opération de segmentation aide à optimiser le sous-échantillonnage ultérieur du signal d'image, en regroupant le plus grand nombre de points possible, au sein de blocs de points à déplacement homogène. Chaque bloc est donc susceptible d'être représenté par un vecteur unique de vitesse de déplacement.

Les vecteurs de vitesse de déplacement permettent ensuite de réaliser un sous-échantillonnage de l'image dans l'axe du mouvement, comme décrit dans la demande de brevet française n° 87 17 601 du 16.12.87, aux noms des mêmes déposants.

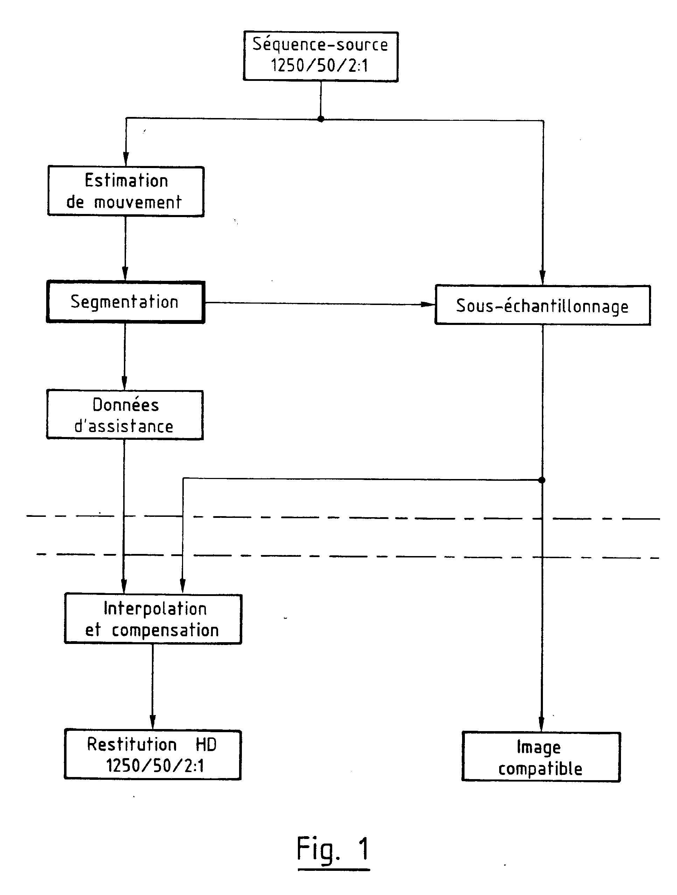

La figure 1 illustre schématiquement la succession d'étapes du processus de codage/décodage dans lequel s'inscrit le procédé de segmentation suivant l'invention.

On notera que la segmentation pilote non seulement le sous-échantillonnage d'images, mais encore l'élaboration de données d'assistance, ces dernières permettant la restitution de l'image haute définition, par interpolation et compensation, à partir de l'image sous-échantillonnée.

Une application avantageuse d'un tel procédé de détection de contour est par exemple de permettre d'optimiser le regroupement des points d'image au sein de blocs de points à déplacement homogène, selon une opération dite "segmentation".

On connaît déjà un procédé de segmentation d'image électronique, en blocs à déplacement homogène, tel que décrit dans la demande de brevet française n0 8803639, déposée le 21 mars 1988 au nom des mêmes déposants. Selon ce procédé connu l'opération de segmentation est insérée au moins partiellement dans un processus d'estimation du mouvement des points d'image utilisant des calculs spécifiques, et coûteux, de critères de choix des vecteurs vitesse représentant, calculs simultanément utilisés pour la segmentation du champ de vecteurs vitesse.

La segmentation proprement dite, dans ce procédé antérieur, a pour principe de base d'allouer un vecteur à un bloc d'image sur critère majoritaire. Or, ce principe souffre d'au moins de deux inconvénients :

- tout d'abord, la mise en oeuvre de ce procédé sur un signal HDMAC n'est compatible avec le débit limité du canal de données MAC, que si l'on utilise une structure d'échantillonnage du type "field skip" (saut de trames). Cette structure consiste à éliminer systématiquement une trame sur deux, et à échantillonner aux mêmes lignes chaque trame conservée mais en quinconce. La fréquence temporelle de transmission des informations de mouvement est alors de 25 Hz. Or, si l'on modifie cette structure dans le sens d'une augmentation de la fréquence temporelle de transmission, jusqu'à par exemple une valeur de 50 Hz, on dépasse la capacité du canal de données MAC (1 Mbit/s) ;

- d'autre part, l'allocation sur critère majoritaire d'un vecteur représentant d'un bloc d'images est inadaptée pour les blocs d'image contenant un "contour". Un contour est essentiellement défini comme une zone de rupture dans l'image, qui correspond par exemple à la frontière de séparation, dans le plan d'image, de deux objets adjacents ou superposés. Or on s'aperçoit que la sélection sur critère majoritaire d'un vecteur représentant pour un tel bloc à contour, se traduit par une mauvaise restitution de l'image, et un bruit psychovisuel désagréable.

Le terme de segmentation au sens de la présente demande désigne donc le découpage en blocs sensiblement homogènes, en ce qui concerne les vecteurs-vitesse des points les constituant. Ces blocs ont un format prédéfini (généralement n∗m points d'images). La segmentation consiste donc par exemple à considérer un bloc de base dans une image, et à découper celui-ci en sous-blocs, s'il n'est pas homogène. L'opération de découpage peut être itérative, jusqu'à obtenir un sous-bloc homogène ou de taille minimale.

On connaît également une autre technique de codage d'images basée sur l'analyse des mouvements dans l'image, consistant à repérer les objets (ensembles de points à vitesse uniforme, caractérisés par leurs contours) et à analyser indépendamment le déplacement de chacun des objets. Cette technique est par exemple décrite dans le document de brevet FR-A-2538653, qui présente un procédé d'estimation du mouvement d'images comportant un procédé de détection de contours basé sur une mesure de gradient de luminance supérieure à un seuil donné, et divulgue le concept général de détermination, parmi les points d'une "zone" formée d'un ensemble de points correspondant à un objet en mouvement, des points qui appartiennent au contour d'un objet et d'affectation à cette zone d'un vecteur-vitesse représentant, et dans "A method of integrating motion information along contours including segmentation" (P. Bouthemy ; 1986, 8 th International Conference on Pattern Recognition, Paris, 27-31 octobre 1986, pages 651-653, IEEE). Il est à noter que, dans ce second document, le terme "segmentation" est utilisé dans un sens totalement différent de celui de l'invention : il concerne le découpage d'un contour en portions de contours.

Cette technique présente l'inconvénient majeur de nécessiter des traitements complexes pour repérer les différents objets dans l'image, par rapport aux techniques de segmentation en blocs. Par ailleurs, du fait de la complexité des calculs, cette technique reste en général limitée au traitement des translations d'objets, et ne peut suivre les rotations d'objets.

L'invention a notamment pour objectif de pallier ces inconvénients.

Plus précisément, un premier objectif de l'invention a été de mettre en évidence la cause de la mauvaise restitution des contours, par le procédé de segmentation connu. Les inventeurs ont ainsi notamment identifié que le problème résulte de ce que le critère de choix majoritaire revient à retenir comme vecteur représentant d'un bloc d'image à contour, la vitesse de déplacement de l'un des deux objets adjacents ou superposés, et non la vitesse de déplacement du contour. En effet, dans le cas où chacun des deux objets en recouvrement est en déplacement dans l'image, à une vitesse distincte, le contour entre objets appartient et doit être affecté à l'un des objets. Or, les inventeurs se sont aperçus que la détection de ces contours présente un double avantage :

- d'un point de vue psychovisuel, l'allocation du vecteur vitesse de contour à un bloc à contours, est bien préférable au critère d'allocation à vecteur majoritaire ;
- la détection et le traitement des contours semblent s'accompagner généralement d'une plus grande tolérance psychovisuelle ce qui permet alors, au moins dans certains cas, de segmenter l'image en blocs de tailles relativement plus importante et donc de limiter davantage le débit du signal d'image sous-échantillonné.

D'autre part, les inventeurs ont également établi que dans le cas d'objets à surface "uniforme", ou "quasi uniforme", seule l'identification des contours permet de relever une valeur de vitesse de déplacement fiable. En effet, dans la mesure où le critère d'estimation de la vitesse de déplacement des points d'image est constituée par l'écart de luminance DFD (DFD = "displaced frame difference") entre l'image source et l'image estimée (voir WALKER D.R. RAO K.R. "New technic in pel - recursive motion compensation" ICC 84, Amsterdam, pp. 703-706), ou tout autre critère équivalent basé sur la luminance ou la chrominance de l'image aux points concernés, une surface mobile uniforme ou quasi uniforme ne permet pas d'obtenir une estimation de vitesse exacte, ni même utile. L'estimation de vitesse ne peut être exacte, du fait que la DFD relevée est nulle ou très faible dans la surface uniforme ou quasi uniforme, alors même que cette surface peut être à vitesse de déplacement élevée. L'information de vitesse obtenue est donc inutile, ou tout au moins présente une utilité foncièrement moindre que la vitesse de déplacement du contour.

L'objectif de l'invention a été non seulement d'identifier les problèmes présentés ci-dessus, mais encore de réaliser des moyens optimisés de résolution de ces problèmes.

Ainsi, un objectif essentiel de l'invention est de fournir un procédé de détection de contours, dans une image électronique, qui soit peu coûteux en terme de calculs algorithmiques, et fiable.

Un autre objectif de l'invention est de fournir un tel procédé qui détermine la vitesse de déplacement du contour, dans une image, et singulièrement des contours à déplacement translatif. On notera que, dans la plupart des cas, la détection de tels contours s'effectue, suivant l'invention, sur des blocs d'images suffisamment petits pour que des contours à déplacement plus complexe (notamment avec une composante rotationnelle), soient néanmoins considérés en approximation comme étant à déplacement translatif.

Un autre objectif fondamental de l'invention est de fournir un procédé de segmentation d'une image électronique, qui allie les performances en terme de débit de données traitées (et notamment des données d'assistance, avec transmission sur canal MAC), à une qualité HD (Haute définition) des images reconstruites dans le décodeur en incluant un procédé de détection des contours dans l'image.

Un objectif complémentaire de l'invention est de fournir un tel procédé de segmentation qui permette de maximiser la taille des blocs d'images segmentés, sans compromettre la qualité psychovisuelle des images reconstruites. Comme déjà mentionné, cet objectif vise à pallier des insuffisances du procédé de segmentation antérieur par lequel la lecture du champ de vecteur dans un bloc à contour, ne permet pas d'allouer l'un ou l'autre vecteur sur critère majoritaire, et conduit donc défavorablement à une division du bloc, voire à sa classification dans la catégorie des blocs "non compensables" (c'est-à-dire insusceptibles de représentation fidèle par un vecteur vitesse unique, par manque d'homogénéité apparente), alors même que la sélection de la vitesse de déplacement du contour est psychovisuellement acceptable.

Ces objectifs, ainsi que d'autres qui apparaîtront par la suite sont atteints à l'aide d'un procédé de réallocation de vecteurs-vitesse selon la revendication 1.

Avantageusement, l'étape de détermination de l'existence d'un contour unique prédominant dans un bloc d'image consiste à vérifier qu'il existe un vecteur vitesse unique représentant un pourcentage du nombre de points-contour sélectionnés dans ledit bloc, supérieur à un pourcentage prédéterminé.

De façon avantageuse, la détection de contours utilisée consiste à associer à chaque point de ladite image, une mesure du gradient de la valeur d'un critère visuel variable associé à chaque point, dans l'environnement immédiat dudit point, et à sélectionner un ensemble de points-contour définis en ce qu'ils sont associés à une mesure de gradient supérieure à un seuil donné.

De façon avantageuse, on associe à chaque point une première mesure du gradient de la valeur dudit critère visuel en direction verticale dans l'environnement immédiat dudit point, et une seconde mesure du gradient de la valeur dudit critère visuel en direction horizontale dans l'environnement immédiat dudit point, et on sélectionne les points dont la mesure du gradient horizontal est supérieure à un seuil donné et/ou dont la mesure du gradient vertical est supérieure à un seuil donné.

Préférentiellement, chacune desdites mesures de gradient est réalisée soit entre ledit point auquel ladite mesure est associée et un point adjacent, soit entre deux points adjacents et sensiblement symétriques par rapport audit point auquel ladite mesure est associée

La détection de contour, retenue par l'invention, est ainsi un opérateur "gradient", et donc de conception très simple. La comparaison de la mesure avec un seuil prédéterminé indique si le point courant appartient ou non à un contour.

De façon avantageuse, ledit critère visuel variable est la luminance.

Préférentiellement, le nombre de vecteurs vitesse représentants, pour une image, est au plus égal à un nombre n prédéterminé.

Dans ce cas, le processus de sélection desdits n vecteurs vitesse représentants comprend notamment les étapes suivantes:

- on associe à chaque point-contour, le vecteur-vitesse estimé de son déplacement dans le plan de l'image;
- on calcule, pour chaque valeur estimée de vecteur vitesse, le nombre de points-contour auxquels ladite valeur est associée;
- on classe lesdits vecteurs-vitesse par ordre décroissant de représentativité des points-contour
- on sélectionne les n premiers vecteurs vitesse de ladite liste de classement.

Un traitement par histogramme bidimensionnel des composantes des vecteurs permet de sélectionner les n vecteurs indépendants et représentatifs, du fait notamment d'une opération de "quantification" de leurs composantes verticales et horizontales. L'indépendance assure qu'il n'y aura pas de conflit dans la phase de réallocation, et la représentativité témoigne qu'un pourcentage très important de points peut être alloué par l'un des n vecteurs déduits de l'histogramme.

Selon une autre caractéristique de l'invention, le procédé de segmentation comporte une phase de réallocation d'un vecteur vitesse, pur bloc d'images, réalisée de la manière suivante :
- si il existe dans le bloc courant des points situés sur un contour, et animés d'une vitesse proche ou égale, alors ce vecteur vitesse est assigné au bloc;
- si au contraire aucun contour n'a été détecté, le bloc est considéré comme étant spatialement uniforme, et un critère majoritaire alloue le vecteur le plus présent dans le bloc.

Avantageusement, on procède, préalablement au classement desdits vecteurs vitesse, à une étape de lissage de la valeur de chaque vecteur vitesse en fonction de l'environnement spatial immédiat du point-contour auquel il est associé, par exemple en affectant à chaque point-contour un vecteur vitesse dont la valeur est la moyenne des vecteurs vitesse estimés pour les points adjacents auxdits points contours, lesdits points adjacents étant préférentiellement ceux présents dans une fenêtre carrée centrée sur ledit point-contour.

Selon une caractéristique préférentielle de l'invention, ledit procédé de détection d'un contour unique prédominant est effectué itérativement, sur des blocs d'images divisés en sous-blocs à chaque itération, ledit découpage itératif étant appliqué à chaque bloc ou sous-bloc jusqu'à détection d'un contour unique prédominant dans chaque bloc ou sous-bloc, ou jusqu'à obtention d'une taille minimale de sous-bloc.

D'autres caractéristiques et avantages de l'invention apparaîtront à la lecture suivante de la description d'un mode de réalisation matériel préférentiel de l'invention, donnée à titre illustratif et non limitatif, et des dessins annexés dans lesquels :
- la figure 1 illustre schématiquement la succession d'étapes du processus de codage/décodage dans lequel s'inscrit le mode de réalisation préférentiel du procédé de segmentation de l'invention;
- la figure 2 est un organigramme illustrant la succession des étapes principales du mode de réalisation préférentiel du procédé de segmentation d'images avec détection de contours, suivant l'invention ;
- la figure 3 représente, de façon schématique, un bloc d'images comportant un contour
- la figure 4 est un agrandissement d'un sous-bloc d'images de 3 x 3 pixels, traversé par un contour, et illustrant le procédé de détection de contour par différence de luminance;
- les figures 5, et 6a, 6b illustrent le principe de détection bidirectionnelle de contours, sur un bloc d'images contenant un contour fermé trapézoïdal.

Les figures 7 à 12 détaillent les fonctions logiques d'une implantation matérielle préférentielle mettant en oeuvre le procédé de segmentation d'image avec détection de contours suivant l'invention, et plus précisément :

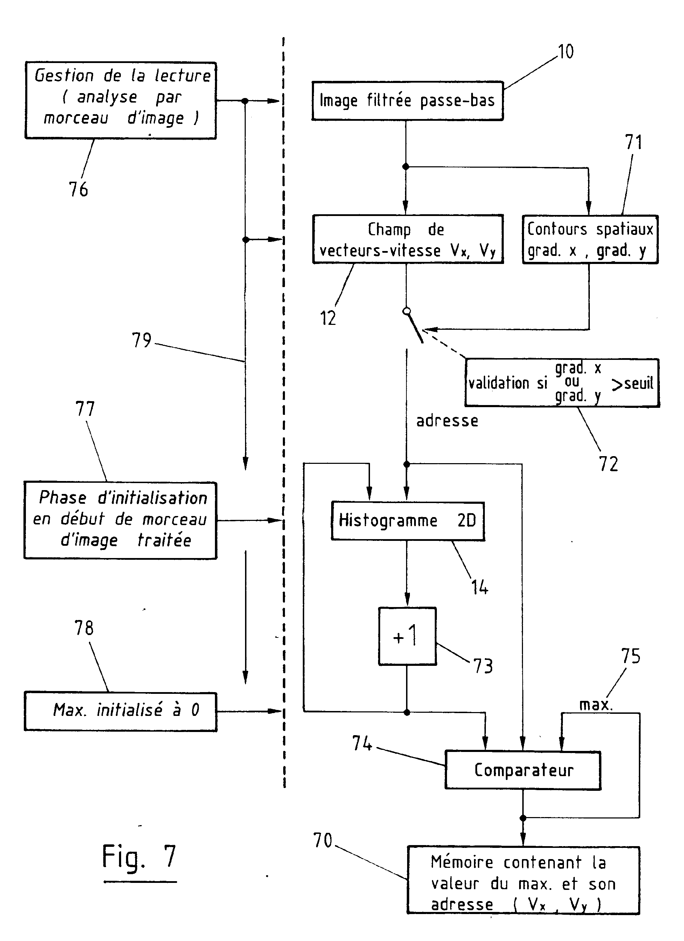

- la figure 7 se rapporte à une première phase de calcul de l'histogramme pour l'image ou la portion d'image courante, et de détermination du maximum de l'histogramme ;

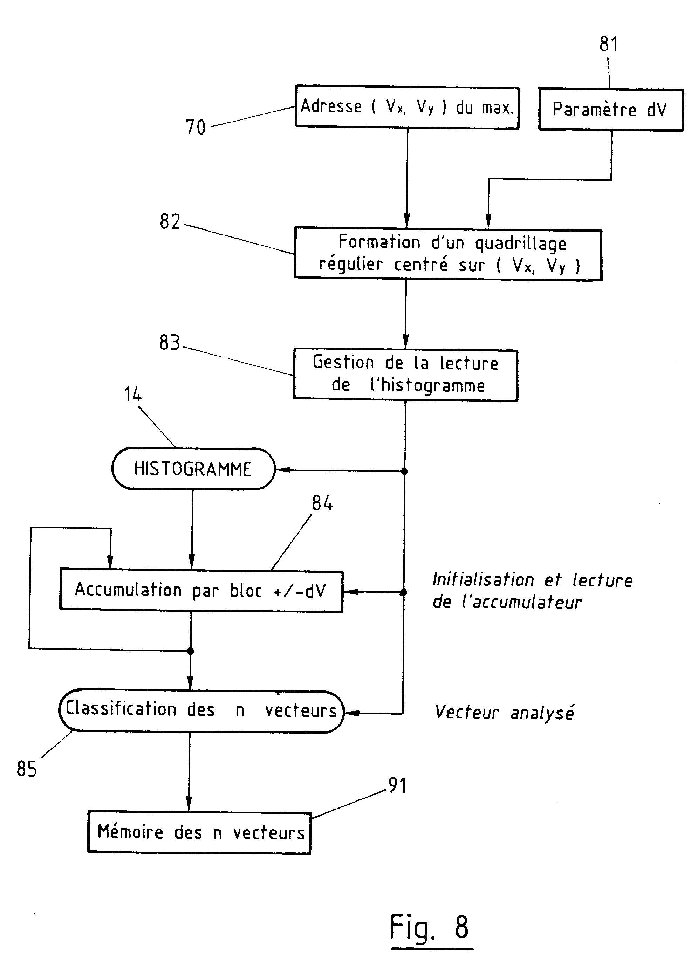

- la figure 8 concerne une seconde phase de sélection de n vecteurs de vitesse de déplacement des points d'image, dans l'histogramme construit en fig 7 ;

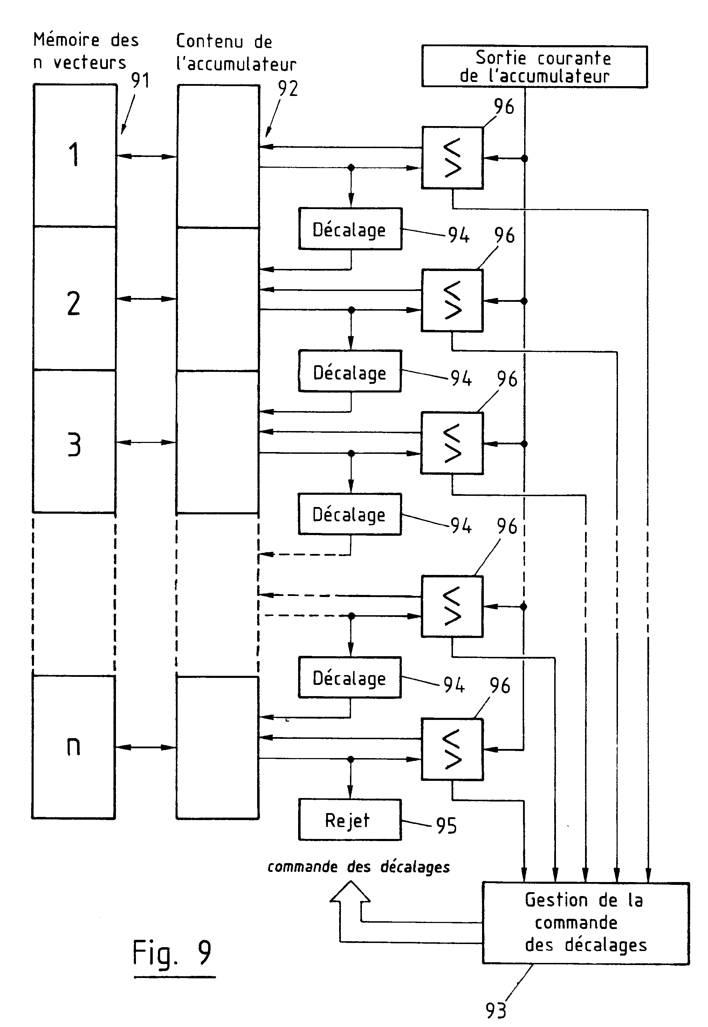

- la figure 9 a pour objet une implantation matérielle de la phase de classification des n vecteurs sélectionnés en figure 8 ;

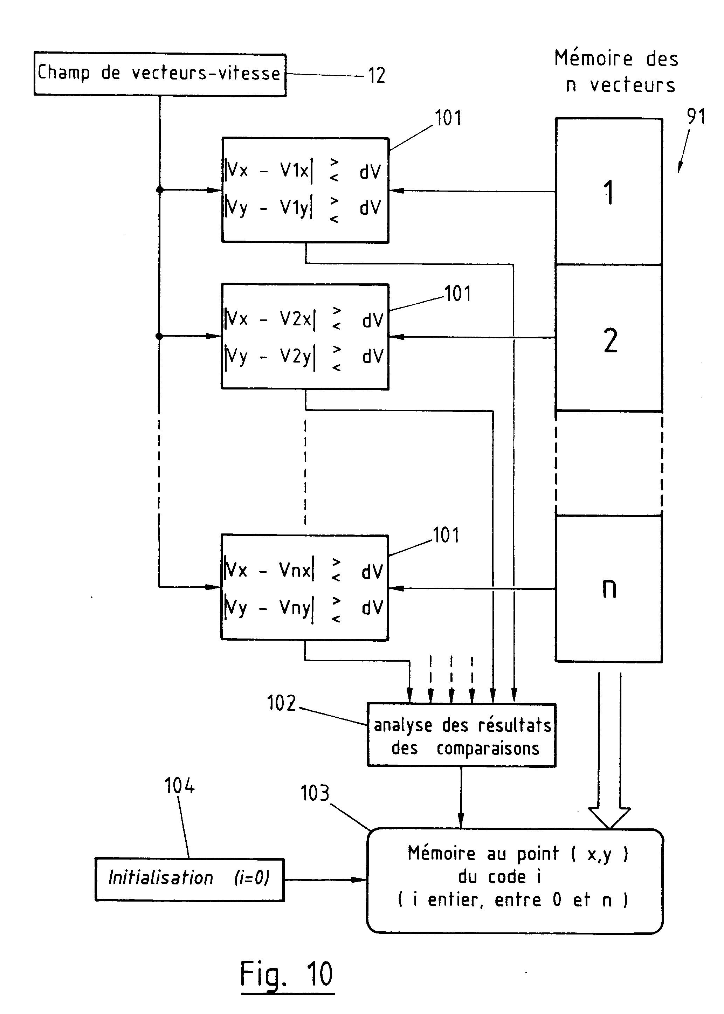

- la figure 10 est relative à une troisième phase de réallocation par points des n vecteurs sélectionnés et classés ;

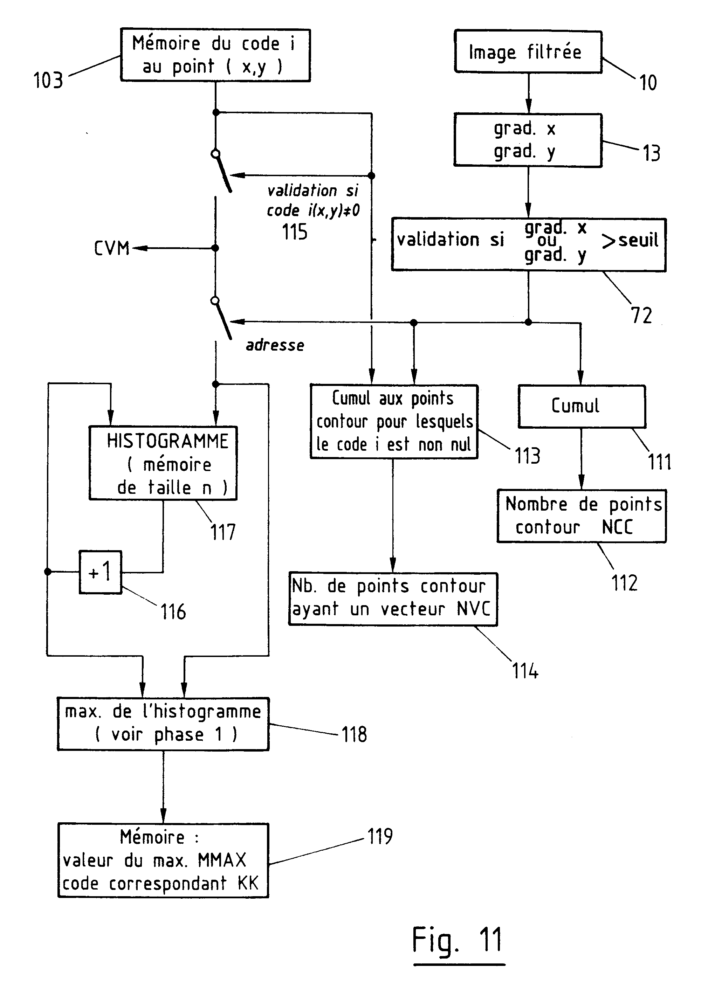

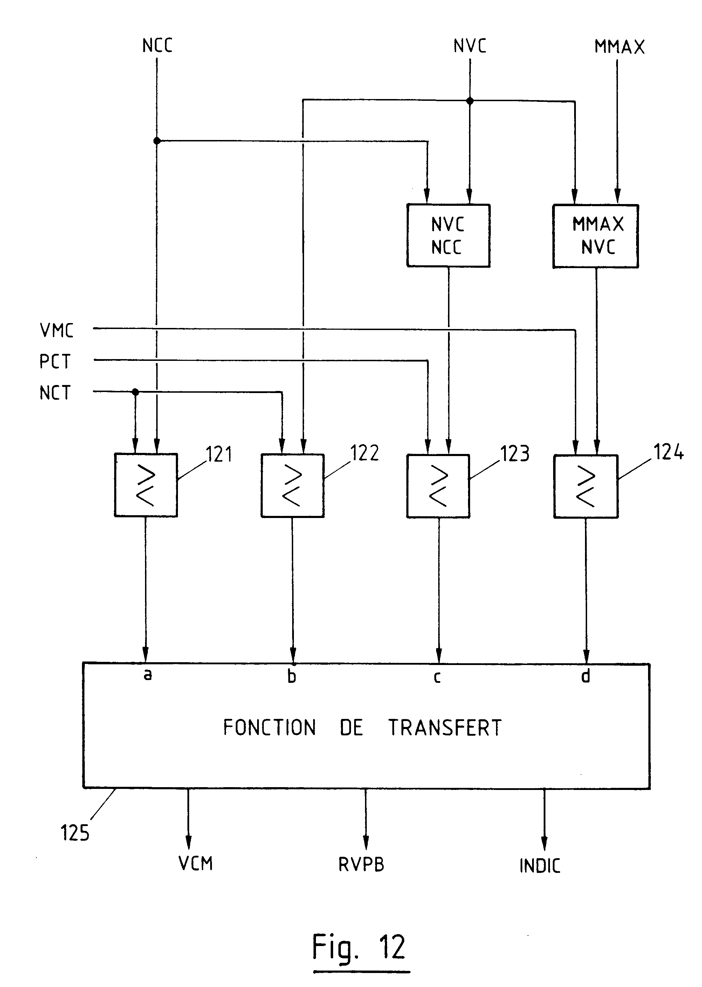

- les figures 11 et 12 explicitent une quatrième phase de réallocation des vecteurs de vitesse de déplacement des points d'image, par blocs de taille N x N (N = 32,16 et 8).

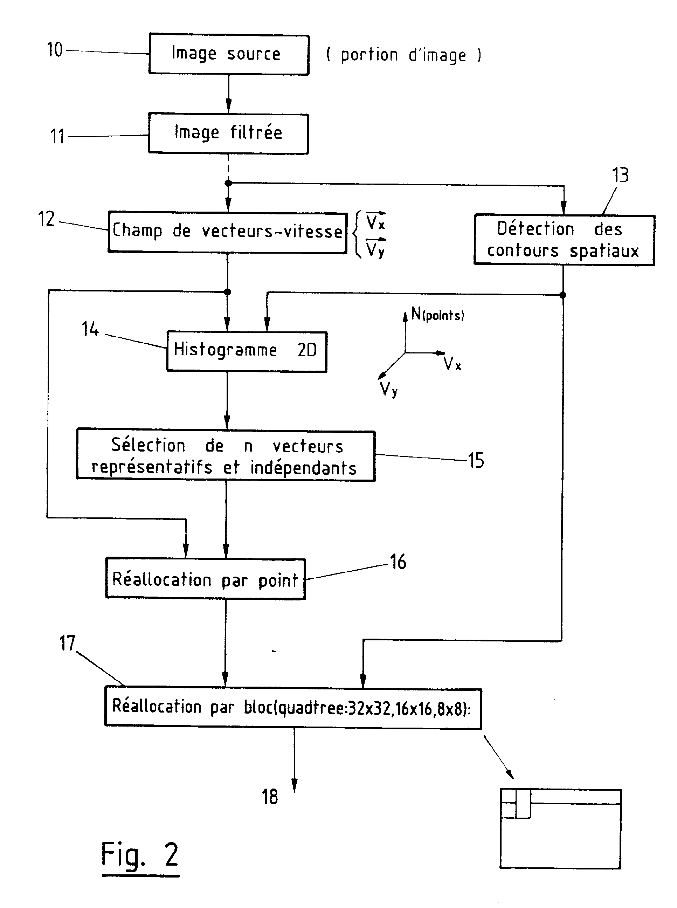

L'ensemble du procédé de segmentation, avec détection de contours, suivant l'invention est présenté en figure 2.

Le procédé est appliqué à une image source 10, appartenant à une séquence d'images électroniques. Plus précisément, le procédé est préférentiellement appliqué à des portions d'images, de façon à limiter les besoins en moyens de calcul et de mémorisation.

Ces portions d'images sont par exemple des blocs quadrangulaires représentant 1/4, ou 1/16e d'image.

Les portions d'image 10 subissent ensuite un traitement de filtrage 11, avant d'être utilisées d'une part pour une étape 12 d'estimation de mouvement entre l'image courante et l'image précédente, et d'autre part, pour une étape 13 de détection des contours spatiaux dans l'image courante.

L'étape 12 d'estimation de mouvement permet d'obtenir, pour l'image ou la portion d'image considérée, un champ de vecteurs vitesse définis par leurs coordonnées (vx, vy). La méthode d'estimation est avantageusement celle décrite dans la demande de brevet française n0 8717601 déjà mentionnée, mais on peut également envisager d'utiliser d'autres méthodes de détermination du champ des vecteurs vitesse dans l'image.

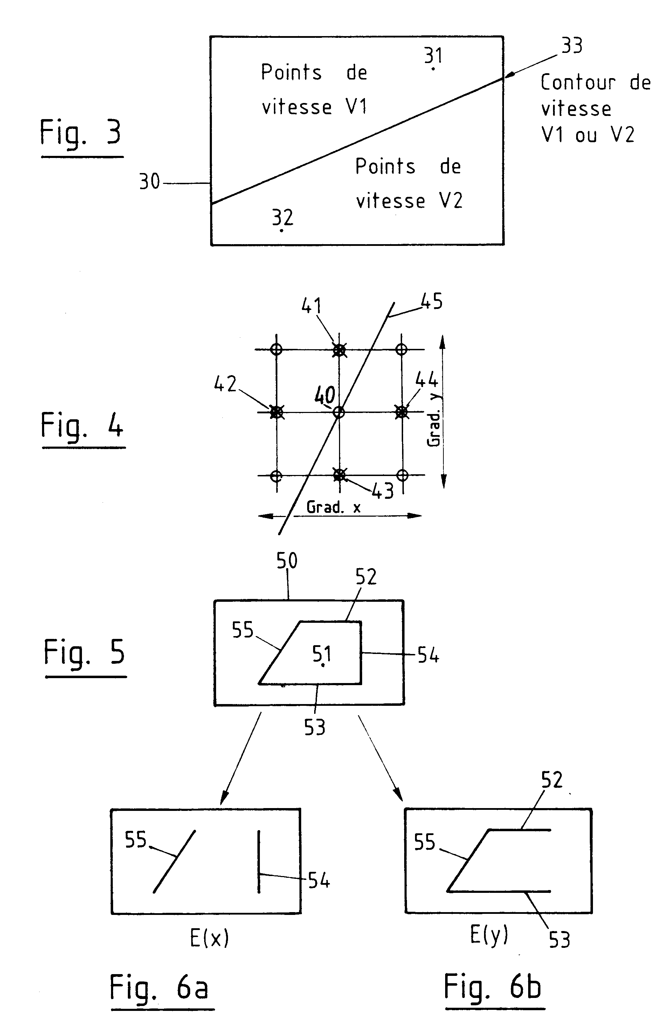

L'étape 13 de détection des contours spatiaux va être détaillée plus avant en relation avec les figures 3, 4, 5, et 6a, 6b. Cette étape permet d'identifier l'existence de contours dans la portion d'image traitée de façon à sélectionner dans l'image les seuls points appartenant à un contour.

Cette sélection permet ensuite, à l'étape 14, de tracer un histogramme bidimensionnel (c'est-à-dire à deux composantes vx, vy) des vecteurs-vitesse des points sélectionnés seulement. En d'autres termes, la détection

5

des contours spatiaux réalisés à l'étape 13 permet d'effectuer une sélection sur le champ des vecteurs-vitesse de l'étape 12, pour ne retenir dans l'histogramme de l'étape 14 que les vitesses de déplacement des points appartenant à un contour.

De façon avantageuse, ledit champ de vecteurs-vitesses peut être préalablement déterminé par un procédé d'estimation du mouvement, dans le plan d'image, des seuls points-contours sélectionnés.

Il peut être avantageux d'introduire une étape (non représentée) de détection de l'existence d'un "panoramique" sur l'image, par exemple après l'étape 13. Le panoramique correspond au cas d'une translation du cadrage d'une image fixe, par exemple lorsqu'une caméra balaye un paysage immobile. Dans une telle situation, il est économique du point de vue des coûts de traitement et des débits de transmission, de repérer que tous les contours sont associés à un vecteur vitesse égal ou très proche. Un seul vecteur vitesse sera donc transmis pour l'ensemble de l'image.

Cette situation est bien entendu exceptionnelle.

Le traitement de l'histogramme bidimensionnel 14 permet, à l'étape 15, de sélectionner n vecteurs indépendants et représentatifs des contours détectés. Comme déjà mentionné plus haut, l'indépendance assure qu'il n'y aura pas de conflit dans la phase ultérieure de réallocation 16, 17 et la représentativité est un facteur de mérite qui rend compte du fait que chacun des n vecteurs sélectionnés, dans l'histogramme, convient à la réallocation d'un pourcentage important de points dans la portion d'image traitée.

L'étape 16 de "réallocation par point" a pour but de remplacer le vecteur-vitesse initialement estimé en chaque point d'image, par l'un des n représentants sélectionnés à l'étape 15. Cette opération de réallocation a pour critère une notion de distance absolue maximale sur chaque composant $vx$, $vy$ des vecteurs-vitesse initiaux, et représentants.

L'étape 17 de "réallocation par bloc" est effectuée au sein d'une procédure de codage hiérarchique par division itérative des blocs jusqu'à obtention d'un seuil acceptable d' "uniformité" ou de "représentativité" par un vecteur-vitesse représentant (quadtree). Les blocs initiaux sont par exemple des blocs 32 x 32 points, susceptibles d'être divisés en quatre blocs de 16 x 16 points eux-mêmes encore découpables en sous-blocs de 8 x 8 points. Selon l'invention, le processus de réallocation par bloc consiste à :

- assigner à chaque bloc, ou sous-bloc, le vecteur-vitesse d'un contour lorsqu'il existe dans le bloc courant des points situés sur un contour unique, et animés d'une vitesse égale, ou proche ;
- allouer le vecteur-vitesse le plus présent dans le bloc, si le bloc est uniforme spatialement, et ne comporte donc pas de contour. Cette allocation est par exemple réalisée sur utilisation d'un critère majoritaire au sein d'un histogramme local des vecteurs-vitesse ;
- décider que le bloc courant est non compensable si, après découpage maximal dans le processus de codage itérative, aucun vecteur-vitesse représentant n'est susceptible d'être alloué au sous-bloc.

Le jeu complet des blocs d'image, affectés chacun de leur vecteur représentant est ensuite acheminé (18) vers un traitement de codage des contours, et des vecteurs représentants, pour transmission à débit réduit.

La figure 3 illustre la situation d'un bloc d'image traversé par un contour, à laquelle le procédé de segmentation suivant l'invention apporte une amélioration substantielle.

Dans le bloc 30 représenté en figure 3, on rencontre d'une part une première zone 31 de points animés d'une vitesse V1, et d'autre part, une seconde zone 32 de points animés d'une vitesse V2. Chacune de ces zones 31, 32, essentiellement homogène, correspond par exemple à une portion de surface apparente de deux objets adjacents, ou superposés dans le plan de l'image. La frontière 33 entre ces deux zones 31 et 32 constitue un contour, animé d'une vitesse égale soit à V1, soit à V2.

Dans le cadre d'un processus de segmentation classique, consistant à attribuer à l'ensemble du bloc 30 un vecteur-vitesse sur un critère majoritaire, on constate d'une part une difficulté de décision (dans le cas où les zones 31 et 32 sont de surfaces approximativement égales), et d'autre part, une distorsion psychovisuelle systématique, comme déjà souligné en préambule.

Le procédé suivant l'invention consiste à repérer les contours 33, dans les blocs d'image, de façon à pouvoir allouer aux blocs à contour, le vecteur-vitesse de déplacement du contour.

En cas de présence de plusieurs contours de vitesse différente dans un même bloc de départ 30, on prévoit une division du bloc en quatre blocs de taille inférieure sur lesquels on effectue une analyse identique de repérage des contours. Cette division peut être réalisée plusieurs fois de manière itérative, jusqu'à une taille minimale à laquelle le bloc est déclaré non compensable si aucun des n vecteurs ne peut être alloué.

Inversement, en cas d'absence de contour 33 dans un bloc 30, on attribuera avantageusement au bloc le vecteur-vitesse majoritaire. Des essais ont montré que cette procédure d'allocation, sans contrainte de représentativité apparaît satisfaisante d'un point de vue psychovisuel.

La figure 4 illustre le principe de détection de contour par mesure d'un gradient de luminance dans l'environnement d'un point 40.

Le point 40 est ici entouré notamment par 4 points adjacents 41, 42, 43, 44 formant maillage d'image. Le maillage représenté est traversé par un contour 45.

La détection du contour 45 s'effectue, dans le cas représenté, par deux mesures de différence de luminosité :

- une première mesure de différence de luminosité, grad x, dans la direction horizontale, entre les points 42 et 44 ;
- une seconde mesure de différente luminosité : grad y, dans le sens vertical, entre les points 41 et 43.

L'identification d'un contour s'effectue alors en fonction du dépassement ou non d'un seuil de différence de luminance, pour l'une ou l'autre des mesures de gradient effectuées. En effet, si grad x est élevé, il y a détection d'un contour vertical. En revanche, grad x est inférieur à un seuil préalablement fixé, on considèrera qu'il n'y a pas de contour vertical entre les points considérés.

Clairement, le même raisonnement s'applique pour la mesure d'une différence verticale de luminosité (grad y) correspondant à la détection des contours horizontaux.

Bien entendu, la mesure des deux gradients associés au point 40 pourrait être réalisée de façon différente, par exemple en effectuant conventionnellement une mesure entre la luminance du point 40, et de chacun des points suivants 44 et 43, en sens horizontal et vertical respectivement.

Le principe de la double mesure, en sens horizontal et en sens vertical, malgré sa redondance dans certains cas, permet de faire face à tous les cas de figures.

Ceci est représenté en figure 5, et 6a, 6b, dans lesquelles est illustrée la détection d'un contour trapézoïdal 51 inscrit dans un bloc d'image 50 (figure 5).

Le contour trapézoïdal 51 est constitué de deux côtés horizontaux 52, 53, d'un côté vertical 54 et d'un côté oblique 55. La mesure de la différence de luminosité horizontale (grad x) est fiable pour la détection des portions de contour 54 et 55 (figure 6a). Cette mesure de grad x, dans le bloc 50, permet de retenir les points des portions de contour 54 et 55. En revanche, la mesure de grad x n'est pas fiable pour la détection des portions de contour horizontales 52 et 53.

Ces portions de contour 52, 53 sont en revanche détectées au moyen du critère de la différence de luminosité verticale de points grad y, de même que, à nouveau, la portion de contour 55 (figure 6b).

Bien entendu, l'invention ne se limite pas à l'utilisation d'un opérateur gradient appliqué à la luminance des points d'image pour la détection des contours. Tout processus équivalent en relation avec un critère psychovisuel de détection de contour peut aussi bien être utilisé.

Les figures 7 à 12 correspondent à une description d'une réalisation matérielle préférentielle de l'invention.

On suppose disposer des composantes Vx et Vy en mémoire au point (x, y), correspondant au champ complet des vecteurs-vitesse d'une portion d'image.

Pour simplifier les calculs et alléger la réalisation matérielle, Vx et Vy sont déterminées un point sur deux, suivant une structure quinconce ligne dans l'image courante.

x note la dimension horizontale (position du point d'image dans la ligne y) et y note la dimension verticale (position de la ligne dans l'image).

La figure 7 décrit les fonctions correspondant à la phase de construction de l'histogramme bidimensionnel. L'histogramme des vecteurs-vitesse est établi à partir des contours de l'image courante.

Un opérateur "gradients spatiaux" définit (71) l'activité spatiale au point (x,y) et valide la lecture du vecteur-vitesse en ce point si l'un des gradients est supérieur à un seuil (de valeur typique égale à 8).

L'opération "gradient" considérée est avantageusement une différence absolue entre les intensités I :

. grad x = /I(x-1,y) - I(x+1,y)/ = /I(42) - I(44)/ (cf Fig. 4)

. grad y = /I(x,y-1) - I(x,y+1)/ = /I(41) - I(43)/ (cf Fig. 4)

Le vecteur (Vx, Vy) validé incrémente d'une unité (73) le contenu N(Vx, Vy) à l'adresse (Vx, Vy) de l'histogramme :

$$Vx, Vy \longrightarrow N (Vx, Vy) + 1$$

De façon avantageuse, Vx et Vy sont définis par 8 bits (1 bit de signe, dynamique +/- 16, précision 1/8). Mais on a constaté que, d'une manière plus générale, une expression sur 6 à 8 bits est convenable, avec 1 bit de signe, et une précision tolérée de 2 à 3 bits après la virgule.

L'histogramme 14 est une mémoire 256 x 256, d'une profondeur limitée à 16 bits (dynamique = 64 K). Cette valeur est rarement atteinte puisque l'image source est analysée par morceaux (typiquement, un morceau représente 1/16e d'image HD). Si cette valeur est atteinte, ce ne peut être qu'une fois (en raison du nombre maximum de points par morceau d'image).

Le maximum MAX 75 de l'histogramme est déterminé pendant et à chaque accès à l'histogramme 14. On compare 74 le contenu incrémenté de l'adresse courante avec le dernier maximum enregistré. Le plus grand est conservé pour la comparaison future :

$$MAX (i) = max (N(Vx, Vy) + 1, MAX (i - 1))$$

i désigne l'instant courant et i-1 le dernier maximum retenu.

La valeur du maximum 75, est enregistrée en mémoire 70 pour permettre les comparaisons successives 74 et n'a plus d'intérêt en fin de ce traitement local.

Un système de gestion 76 analyse l'image par morceaux prédéterminés et commande 79 l'initialisation de l'histogramme 77, et du maximum 78 au début de chaque morceau traité.

La figure 8 correspond à une phase de sélection de n vecteurs dans l'histogramme, choisis comme étant les plus représentatifs sur la portion d'image traitée.

Au début de cette phase, on dispose d'un histogramme 14 et de la valeur (Vx, Vy) du maximum de cet histogramme en mémoire 70.

Déterminer les n vecteurs les plus importants revient à extraire les n maxima de l'histogramme.

Cependant, il est considéré que tous les points appartenant à une certaine plage, par exemple distants de +/- dV (81) (en terme de vecteur-vitesse) auront le même vecteur représentant.

L'erreur ainsi introduite sur certains points n'est pas subjectivement visible et les avantages sont multiples, en terme de "filtrage" du champ de vecteur, en terme de nombre total de points représentés ou encore notamment en terme de précision pour la compensation.

Le paramètre : dV = 1/8 a été considéré comme étant optimal suite aux expériences menées et aux résultats obtenus. Une valeur supérieure augmente le nombre de points représentés, mais des cas critiques de saccades légères mais perceptibles ont été constaté. Ces saccades sont dues à la commutation entre vecteurs ou à un choix de vecteur trop éloigné (à dV près) de la valeur réelle.

La connaissance du maximum (Vx, Vy) 70 de l'histogramme et le paramètre dV construisent un quadrillage régulier 82 de l'histogramme centré sur (Vx, Vy). Chaque cellule élémentaire a pour centre :

$$Vi = Vx + k.(2.dV + 1)$$
$$Vj = Vy + k.(2.dV + 1)$$

k est un entier, variant par pas de 1, depuis 0 jusqu'aux valeurs vérifiant les inégalités :

- 16 <Vi<16
- 16 <Vj<16

Chaque cellule élémentaire a pour dimensions (2.dV + 1).(2.dV + 1) centrée sur Vi, Vj.

Pour sélectionner les n vecteurs, toutes les cellules sont lues 83 et le contenu de chacune est cumulé 84 (indépendamment des autres). Pour la cellule repérée par 1, l'intégrale I (1) associée est :

$$I(1) = \sum_{a=-dV}^{+dV} \sum_{b=-dV}^{+dV} N(Vi(1) + a, Vj(1) + b)$$

Vi(1) et Vj(1) sont les coordonnées du centre de la cellule 1. N(V1, V2) est le contenu de l'histogramme des vecteurs-vitesse au point (V1, V2).

La classification 85 consiste à déterminer les n plus fortes valeurs de I(1) et en conséquence, à connaître les n vecteurs (Vi(1), Vj(1)) représentants.

Appelons I(m) le contenu de l'accumulateur m 90 (figure 9) associé au vecteur (Vi(m), Vj(m)), m appartient à (1,n).

Si I(1) < I(m), le contenu I(m) de l'accumulateur m prend la valeur I(1) et le vecteur (Vi(1), Vj(1)) est mémorisé en correspondance dans la mémoire 91. Le contenu I(m) est décalé (94) en position m + 1 et ce, jusqu'à n. Le contenu I(n) est éliminé (95).

Pour éviter de tester une à une les inégalités, la solution globale de la figure 9 propose de mener en parallèle toutes les comparaisons 96. Un traitement absorbe les résultats et gère les décalages (93).

Comme illustré en figure 10 (troisième phase), le champ de vecteurs-vitesse initial est ensuite réalloué en chaque point (x, y) par l'un des n vecteurs sélectionnés.

On note :

Vx, Vy le vecteur original au point (x, y)

Vix, Viy le vecteur de rang i (i appartient à (1,n).

La vérification simultanée des inégalités :

/Vx-Vix/ < ou = dV

/Vy-Viy/ < ou = dV

permet d'attribuer le vecteur (Vix, Viy) au point (x,y).

En raison du quadrillage régulier de description de l'histogramme, il ne peut pas y avoir de multiples solutions (critère d'indépendance entre vecteurs).

Il y aura au plus un couple d'inégalités vérifiées. Un fonctionnement parallèle des n candidats 101 accélère le traitement ; et l'analyse 102 des résultats des comparaisons transfère en mémoire 103 le code i au point (x, y).

L'intérêt de mémoriser le code i est de limiter la taille de la mémoire 103 :

$$Vx, Vy \longrightarrow 16 \text{ bits}$$
$$i \longrightarrow 4 \text{ bits si } n = 16 \text{ vecteurs candidats}$$

Grâce à une initialisation préalable à 0 104, tout point (x, y) tel que :

pour tout i : /Vx-Vix/ > dV
ou /Vy-Viy/ > dV
i appartient à (1, n)

est considéré comme point non alloué.

La quatrième phase (figure 11) correspond à une réallocation par bloc. On considère un bloc de taille N x N. Un vecteur sera alloué à ce bloc si :

1) les points de ce bloc situés sur un contour spatial de l'image ont même vecteur (à x % près) ;

2) aucun contour n'existe dans ce bloc, auquel cas un critère majoritaire attribue le vecteur le plus présent.

Si aucune des conditions précédentes n'est vérifiée, la taille N x N du bloc est divisée et on considère 4 blocs de taille N/2 x N/2 sur lesquels les procédures ci-dessus sont mises en oeuvre séparément.

Si la taille N x N est la taille minimale admise, le bloc non alloué est considéré non compensable.

A partir des gradients déjà calculés, on dénombre le nombre de points du bloc situés sur un contour, donc vérifiant le système (72) :

grad x > seuil
ou grad y > seuil

Le cumul 111 est la fonction : NCC ---> NCC + 1, et permet de dénombrer les points situés sur un contour.

Parallèlement, on dénombre 114 le nombre de points du bloc situés sur un contour et attachés à un vecteur, par la fonction de cumul 113.

$$NVC \longrightarrow NVC + 1,$$

si        : code i <> 0,
et si      : grad x > seuil
ou        : grad y > seuil

Ces fonctions 111, 113 se réalisent aisément par des circuits électroniques classiques ou éventuellement par des circuits spécialisés et développés pour cela.

Si        : code i <> 0 (115)
et si      : grad x > seuil
ou        : grad y > seuil (72),

alors on incrémente d'une unité 116 le contenu de l'adresse i (la mémoire 117 contenant l'histogramme aura été initialisé en début de bloc courant).

La détermination du maximum MMAX 118 de l'histogramme 117 et du code noté KK correspondant est analogue au traitement déjà décrit en relation avec la figure 7. Cette valeur est enregistrée en mémoire 119.

Pour la compréhension de la figure 12 relative au choix du vecteur d'un bloc, on rappelle que :

NCC : Nombre de points contour du bloc courant

NVC : Nombre de points contour ayant un vecteur validé

MMAX : maximum de l'histogramme local.

On définit :

NCT : nombre en dessous duquel on ne valide pas les points contour (le bloc est alors dit uniforme), par exemple : NCT = 5.

NVC/NCC : rapport entre le nombre de points contour ayant un vecteur validé et le nombre total de points contour.

PCT : pourcentage imposant ou non l'influence des points contour ayant un vecteur validé, par exemple : PCT = 0,6.

MMAX/NVC : plus grand pourcentage de points contours ayant le même vecteur.

VCM : acceptation ou non du vecteur majoritaire des points contour, par exemple : VCM = 0,8.

Selon les résultats des comparaisons 121, 122, 123, 124 de la figure 12, une fonction de transfert 125 valide la sortie d'un circuit suivant

1) circuit CVM : il n'y a pas de contour spatial dans le bloc courant et le vecteur est choisi sur critère majoritaire.

Le vecteur majoritaire du bloc N x N est le vecteur le plus présent dans ce bloc. Par histogramme et recherche du maximum, on retient le code du vecteur correspondant en ce maximum.

Si la sortie du circuit CVM est validée, tous les points du bloc sont affectés du code retenu.

2) Circuit RVPB : les points contour ont majoritairement le même vecteur qui est alloué à tous les points du bloc courant.

Le code KK correspondant au vecteur du contour majoritaire est connu (figure 11). Le circuit RVPB est alors simplement une validation du code KK et son affectation à tous les points du bloc.

3) signal INDIC : l'allocation au niveau du bloc N x N est impossible et, soit le bloc est divisé en 4 blocs, soit le bloc est déclaré non compensable si N x N est la taille inférieure admise.

Si le signal INDIC est nul, on teste la taille N x N.

Si cette taille n'est pas la taille minimale, tous les points du bloc sont affectés du code nul qui témoigne que le bloc ne sera pas compensable et devra, dans un schéma complet HDMAC, être traité par une autre voie (demande de brevet français 8717601, déjà citée).

Les résultats obtenus par la mise en oeuvre de l'invention, dans le cadre d'une image Haute Définition destinée à être transmise par canal MAC (HDMAC) s'expriment en terme de qualité d'images d'une part, et de débit d'autre part.

A partir des expérimentations menées par les inventeurs il ressort que la segmentation proposée ne dégrade pas sensiblement la qualité de l'image reconstruite par rapport à l'image originale. Il reste important de noter que la segmentation affecte une (ou plusieurs) voie(s) à compensation de mouvement mise(s) en concurrence, au sein d'un même système HDMAC, avec des voies à filtres linéaires. Ce système restitue une image globale, résultat du mélange de plusieurs voies.

Pour juger du débit, limité à 1,1 Mbits/s dans le canal MAC, une simple opération permet d'évaluer les performances de la segmentation :

$$débit = nb \times (cb + cv) \times nd \times ft$$

Le débit dû à la segmentation est le produit de :

nb = nombre de blocs par secteur d'images HD

nd = nombre de secteurs dans une image HD

cb = nombre de bits pour coder la taille d'un bloc

cv = nombre de bits pour coder un vecteur

ft = fréquence temporelle

Les chiffres retenus actuellement sont :

nd = 16 secteurs par image HD

cb = 1 (pour des blocs 32 x 32, 16 x 16 ou 8 x 8)

cv = 4 (car 16 vecteurs par secteur)

Pour une voie 40 ms à compensation de mouvement, la structure d'échantillonnage est de type "field skipped" et donc : ft = 25 Hz.

Sachant qu'en moyenne : nb = 150, alors le débit d'une voie 40 ms est inférieur à 400 kbits/s.

Pour une voie 80 ms à compensation de mouvement, on désentrelace les trames impaires par filtre linéaire. Le mouvement est évalué entre les images ainsi constituées. On transmet une image désentrelacée originale sur deux (sous échantillonnée spatialement pour respecter la norme MAC) et le champ de vecteurs segmenté permettant de reconstruire l'image non transmise. La fréquence temporelle de transmission des vecteurs est donc :

ft = 12,5 Hz

d'où un débit (pour une voie 80 ms compensée) inférieur à 200 kbits/s.

Puisqu'il y a exclusion entre les voies 40 ms et 80 ms, le débit total est inférieur à la somme des débits calculés ci-dessus.

## Revendications

1. Procédé de réallocation de vecteurs-vitesse dans des images en fonction de la segmentation d'un champ de vecteurs-vitesse,

lesdits vecteurs-vitesse étant notamment représentatifs de la vitesse courante de déplacement, dans le plan de l'image, de points (41, 42, 43, 44) d'une image électronique appartenant à une séquence d'images,

ladite segmentation consistant à découper ledit champ de vecteurs-vitesse en blocs d'image comprenant des points ayant des vecteurs-vitesse homogènes, selon un critère d'homogénéité visant à regrouper des vecteurs-vitesse associés à des points effectuant des déplacements sensiblement similaires, et à affecter à chacun desdits blocs au moins un vecteur-vitesse représentatif du mouvement du bloc,

lesdits blocs présentant un format prédéfini, sélectionné parmi un ensemble de formats prédéfinis disponibles,

caractérisé en ce qu'il comprend un procédé (13) de détection de contours dans chacun desdits blocs

10

d'image, comprenant une étape de recherche des points-contour dans chaque bloc d'image et une étape de détermination de l'existence d'un contour principal unique dans ledit bloc d'image, consistant à vérifier qu'il existe un vecteur-vitesse unique représentant un pourcentage du nombre de points-contour sélectionnés dans ledit bloc d'image supérieur à un pourcentage prédéterminé, et en ce que, lorsqu'un bloc comprend un contour principal unique, ledit vecteur-vitesse représentatif du mouvement dudit bloc est le vecteur-vitesse correspondant audit contour principal.

2. Procédé selon la revendication 1, caractérisé en ce qu'il utilise le procédé de détection de contours consistant à associer à chaque point (41, 42, 43, 44) de ladite image, une mesure du gradient de la valeur d'un critère visuel, représentatif de la perception visuelle humaine dans l'environnement immédiat dudit point, et à sélectionner un ensemble de points-contour définis en ce qu'ils sont associés à une mesure de gradient supérieure à un seuil donné.

3. Procédé suivant la revendication 2, caractérisé en ce que ledit critère visuel de valeur variable est la luminance.

4. Procédé selon la revendication 3, caractérisé en ce que ledit pourcentage prédéterminé est compris entre 80 % et 90 % environ, préférentiellement 85 % environ.

5. Procédé selon la revendication 1, caractérisé en ce que le nombre de vecteurs vitesse représentants, pour une image, ou une portion d'image est au plus égal à un nombre n prédéterminé.

6. Procédé selon la revendication 5, dans le cas de la segmentation d'une image, ou portion d'image, en haute définition, destinée à subir un traitement de compression en vue de sa transmission à travers un canal à débit limité de type MAC, ledit traitement de compression étant du type à saut de trame et échantillonnage en quinconce-'field skipped'-, avec transmission de données d'assistance à la reconstruction de l'image comprimée représentatives notamment du mouvement des points retenus par l'échantillonnage, caractérisé en ce que ledit nombre n de vecteurs vitesse représentants est au moins égal à 12, préférentiellement 15 environ.

7. Procédé selon la revendication 5, caractérisé en ce que le processus de sélection desdits n vecteurs vitesse réprésentants comprend notamment au moins certaines des étapes suivantes :
   - on associe à chaque point-contour, le vecteur-vitesse estimé de son déplacement dans le plan de l'image ;
   - on calcule, pour chaque valeur estimée de vecteur vitesse, le nombre de points-contour auxquels ladite valeur est associée ;
   - on lisse la valeur de chaque vecteur-vitesse en fonction de l'environnement spatial immédiat du point-contour auquel il est associé ;
   - on classe lesdits vecteurs-vitesse par ordre décroissant de représentativité des points-contour ;
   - on sélectionne les n premiers vecteurs vitesse de ladite liste de classement.

8. Procédé suivant la revendication 1 caractérisé en ce que ledit procédé de détection d'un contour unique prédominant est effectué itérativement, sur des blocs d'images divisés en sous-blocs à chaque itération, ledit découpage itératif étant appliqué à chaque bloc ou sous-bloc jusqu'à détection d'un contour unique prédominant dans chaque bloc ou sous-bloc.

9. Procédé suivant la revendication 8 caractérisé en ce que ledit découpage itératif est effectué jusqu'à obtention d'une taille minimale de sous-bloc, et en ce que chaque sous-bloc de taille minimale comprenant des points de contour n'appartenant pas un contour unique prédominant est déclaré non compensable c'est-à-dire insusceptible de représentation fidèle par un vecteur-vitesse unique, aucun vecteur-vitesse représentatif n'étant alors affecté audit sous-bloc, et/ou est représenté par le vecteur-vitesse représentant le plus grand nombre de points dans ledit bloc.

**Patentansprüche**

1. Verfahren zur erneuten Zuordnung von Geschwindigkeitsvektoren in Bildern, als Funktion der Segmentierung eines Geschwindigkeitsvektorenfeldes, wobei die Geschwindigkeitsvektoren insbesondere für die jeweils in der Bildebene geltende Bewegungsgeschwindigkeit von Punkten (41, 42, 43, 44) eines elektronischen Bildes aus einer Folge von Bildern repräsentativ sind, wobei die Segmentierung darin besteht, das Geschwindigkeitsvektorenfeld in Bildblöcke zu zerschneiden, die Punkte mit homogenen Geschwindigkeitsvektoren umfassen, gemäß eines Homogenitätskriteriums, welches das Zusammenfügen von Geschwindigkeitsvektoren anstrebt, die mit Punkten annähernd gleicher Bewegung assoziiert sind, und wobei jedem dieser Blöcke mindestens ein für die Blockbewegung repräsentativer Geschwindigkeitsvektor zugeordnet wird, wobei die Blöcke ein im voraus definiertes Format aufweisen, das unter einer Menge verfügbarer, im voraus definierter Formate ausgewählt wurde, dadurch gekennzeichnet, daß es ein Verfahren (13) zum Erfassen von Umrissen in jedem Bildblock umfaßt, bestehend aus einer Stufe zum Suchen der Umrißpunkte in jedem Bildblock und aus einer Stufe zum Feststellen der Existenz eines einmaligen Hauptumrisses im Bildblock, wobei das Verfahren in der Feststellung der Existenz eines einzelnen Geschwindigkeitsvektors besteht, welcher eine Prozentzahl der im Bildblock ausgewählten Umrißpunkte darstellt, die höher ist, als eine im voraus festgelegte Prozentzahl, und dadurch, daß, wenn ein Block einen einzigen Hauptumriß umfaßt, der Geschwindigkeitsvektor, der für die Bewegung des Blocks repräsentativ ist, derjenige ist, der dem Hauptumriß entspricht.

2.  Verfahren gemäß Anspruch 1,
    dadurch gekennzeichnet, daß es das Verfahren zum Erfassen von Umrissen anwendet, welches darin besteht, jedem Punkt (41, 42, 43, 44) des Bildes ein Maß des Gradienten eines visuellen Kriteriums zuzuordnen, das für das visuelle Erfassungsvermögen des Menschen in der unmittelbaren Nachbarschaft des Punktes repräsentativ ist und in der Auswahl einer Menge von Umrißpunkten, welche dadurch definiert sind, daß sie mit einem Maße des Gradienten assoziiert sind, das größer ist als ein gegebener Schwellenwert.

3.  Verfahren gemäß Anspruch 2,
    dadurch gekennzeichnet, daß das visuelle Kriterium mit variablem Wert die Leuchtdichte ist.

4.  Verfahren gemäß Anspruch 3,
    dadurch gekennzeichnet, daß die im voraus festgelegte Prozentzahl in etwa zwischen 80 und 90 % liegt, bevorzugterweise bei 85 %.

5.  Verfahren gemäß Anspruch 1,
    dadurch gekennzeichnet, daß die Anzahl der darstellenden Geschwindigkeitsvektoren eines Bildes oder eines Bildteils höchstens einer im voraus festgelegten Zahl gleicht.

6.  Verfahren gemäß Anspruch 5, für den Fall der Segmentierung, bei Hochauflösung, eines Bildes oder eines Bildteils, das zum Zweck seiner Übertragung über einen Kanal mit beschränkter Kapazität vom Typ MAC, einem Kompressionsverfahren unterworfen werden soll, wobei das Kompressionsverfahren von der Zeilensprung- und der versetzten "field-skipped" Abtastungsart ist, mit Übertragung von Hilfsdaten für die Wiederherstellung des komprimierten Bildes, die insbesondere für die Bewegung der bei der Abtastung zurückgehaltenen Punkte repräsentativ sind,
    dadurch gekennzeichnet, daß die Zahl n der darstellenden Geschwindigkeitsvektoren mindestens gleich 12 ist, bevorzugterweise etwa 15.

7.  Verfahren gemäß Anspruch 5,
    dadurch gekennzeichnet, daß das Auswahlverfahren der n darstellenden Geschwindigkeitsvektoren insbesondere mindestens einige der folgenden Schritte umfaßt:
    - jeder Umrißpunkt wird mit dem für seine Bewegung in der Bildebene geschätzten Geschwindigkeitsvektor assoziiert;
    - es wird für jeden geschätzten Wert eines Geschwindigkeitsvektors die Zahl der Umrißpunkte berechnet, mit denen der Wert assoziiert ist;
    - der Wert eines jeden Geschwindigkeitsvektors wird als Funktion der unmittelbaren räumlichen Umgebung des mit ihm assoziierten Umrißpunktes geglättet;
    - die Geschwindigkeitsvektoren werden nach abnehmender Reihenfolge ihrer Repräsentativität von Umrißpunkten klassifiziert;
    - es werden die n ersten Geschwindigkeitsvektoren der Klassifizierungsliste gewählt.

**8.** Verfahren gemäß Anspruch 1,
dadurch gekennzeichnet, daß das Verfahren zum Erfassen eines einzigen vorherrschenden Umrisses iterativ durchgeführt wird, und zwar über Bilderblöcke, die bei jeder Iteration in Unterblöcke unterteilt werden, wobei das iterative Unterteilen auf jedem Block oder Unterblock bis zum Erfassen eines einzelnen vorherrschenden Umrisses in jedem Block oder Unterblock erfolgt.

**9.** Verfahren gemäß Anspruch 8,
dadurch gekennzeichnet, daß das iterative Unterteilen solange durchgeführt wird, bis eine minimale Unterblockgröße erreicht ist, und daß jeder Unterblock minimaler Größe, der Umrißpunkte umfaßt, die nicht einem einzelnen vorherrschenden Umriß angehören, als nicht kompensierbar erklärt wird, d. h., daß seine getreue Darstellung durch einen einzigen Geschwindigkeitsvektor nicht möglich ist, wobei in diesem Falle kein repräsentativer Geschwindigkeitsvektor dem Unterblock zugeteilt wird, und/oder daß jeder Unterblock minimaler Größe durch den Geschwindigkeitsvektor dargestellt wird, der die höchste Punktzahl in diesem Block darstellt.

## Claims

**1.** Process for reallocating velocity vectors in images on the basis of the segmenting of a velocity vector field,
the said velocity vectors being, in particular, representative of the current rate of movement, in the plane of the image, of points (41, 42, 43, 44) of an electronic image belonging to an image sequence,
the said segmenting consisting in partitioning the said velocity vector field into image blocks comprising points having homogeneous velocity vectors according to a homogeneity criterion which aims to group together velocity vectors associated with points performing substantially similar movements, and in assigning to each of the said blocks at least one velocity vector representative of the motion of the block, the said blocks exhibiting a predefined format selected from a set of available predefined formats, characterized in that it comprises a process (13) for detecting contours in each of the said image blocks, comprising a step of searching for the contour points in each image block and a step of determining the existence of a single main contour in the said image block, consisting in checking whether there exists a single velocity vector representing a percentage, greater than a predetermined percentage, of the number of contour points selected in the said image block,
and in that, when a block comprises a single main contour, the said velocity vector representative of the motion of the said block is the velocity vector corresponding to the said main contour.

**2.** Process according to Claim 1, characterized in that it uses the process for detecting contours consisting in associating with each point (41, 42, 43, 44) of the said image, a measure of the gradient of the value of a visual criterion representative of the human visual perception in the immediate environment of the said point, and in selecting a set of contour points defined as being associated with a gradient measure greater than a given threshold.

**3.** Process according to Claim 2, characterized in that the said visual criterion of variable value is the luminance.

**4.** Process according to Claim 3, characterized in that the said predetermined percentage is between 80 % and 90 % roughly, preferably 85 % roughly.

**5.** Process according to Claim 1, characterized in that the number of representative velocity vectors, for an image, or an image portion, is at most equal to a predetermined number n.

**6.** Process according to Claim 5, in the case of the segmenting of an image, or image portion, in high definition, intended to undergo compression processing with a view to its transmission through an MAC type channel with limited throughput, the said compression processing being of the field skipped and quincunx sampling type, together with transmission of data for assisting with the reconstruction of the compressed image and which are representative in particular of the motion of the points picked by the sampling, characterized in that the said number n of representative velocity vectors is at least equal to 12, preferably 15 roughly.

7. Process according to Claim 5, characterized in that the procedure for selecting the said n representative velocity vectors comprises in particular at least some of the following steps:
   - with each contour point is associated the estimated velocity vector of its movement in the plane of the image;
   - for each estimated value of velocity vector, the number of contour points with which the said value is associated is calculated;
   - the value of each velocity vector is smoothed on the basis of the immediate spatial environment of the contour point with which it is associated;
   - the said velocity vectors are ranked in decreasing order of representativity of the contour points;
   - the first n velocity vectors of the said ranking list are selected.

8. Process according to Claim 1, characterized in that the said process for detecting a predominant single contour is performed iteratively, on image blocks divided into sub-blocks at each iteration, the said iterative partitioning being applied to each block or sub-block until a predominant single contour is detected in each block or sub-block.

9. Process according to Claim 8, characterized in that the said iterative partitioning is performed until a minimum size of sub-block is obtained, and in that each sub-block of minimum size comprising contour points not belonging to a predominant single contour is declared uncompensatable, that is to say incapable of faithful representation by a single velocity vector, no representative velocity vector then being assigned to the said sub-block, and/or is represented by the velocity vector representing the largest number of points in the said block.

```
                    ┌─────────────────────┐
                    │   Séquence-source   │
                    │     1250/50/2:1     │
                    └─────────────────────┘
```

Estimation
de mouvement

Segmentation → Sous-échantillonnage

Données
d'assistance

Interpolation
et compensation

Restitution HD
1250/50/2:1

Image
compatible

## Fig. 1

10 — Image source ( portion d'image )

11 — Image filtrée

13

12 — Champ de vecteurs-vitesse $\left\{\begin{array}{l}\overrightarrow{V_x}\\\overrightarrow{V_y}\end{array}\right.$

Détection des contours spatiaux

14 — Histogramme 2D

N(points)

Vx

Vy

15 — Sélection de n vecteurs représentatifs et indépendants

16 — Réallocation par point

17 — Réallocation par bloc(quadtree:32x32,16x16,8x8):

18

Fig. 2

16

Fig. 3

30

Points de
vitesse V1

31

Points de
vitesse V2

32

33

Contour de
vitesse
V1 ou V2

Fig. 4

41

42

40

44

45

43

Grad. y

Grad. x

Fig. 5

50

52

55

5.1

54

53

E(x)

55

54

Fig. 6a

E(y)

55

52

53

Fig. 6b

Gestion de la lecture
( analyse par
morceau d'image )

76

79

77

Phase d'initialisation
en début de morceau
d'image traitée

78

Max. initialisé à 0

## Fig. 7

Image filtrée passe-bas

10

71

Champ de
vecteurs-vitesse $V_x$, $V_y$

Contours spatiaux
grad. x , grad. y

12

validation si grad. x ou grad. y >seuil

adresse

72

Histogramme 2D

14

+1

73

75

max.

74

Comparateur

70

Mémoire contenant la
valeur du max. et son
adresse ( $V_x$ , $V_y$ )

18

70 — Adresse ( $V_x$, $V_y$ ) du max.

81 — Paramètre dV

82 — Formation d'un quadrillage régulier centré sur ( $V_x$, $V_y$ )

83 — Gestion de la lecture de l'histogramme

14 — HISTOGRAMME

84 — Accumulation par bloc +/-dV

*Initialisation et lecture de l'accumulateur*

Classification des n vecteurs

85 —

*Vecteur analysé*

91 — Mémoire des n vecteurs

## Fig. 8

Mémoire des
n vecteurs

Contenu de
l'accumulateur

Sortie courante
de l'accumulateur

91

92

96

1

Décalage — 94    96

<

>

2

Décalage — 94    96

<

>

3

Décalage — 94    96

<

>

Décalage — 94    96

<

>

n

Décalage — 94    96

<

>

Rejet — 95

commande des décalages

Gestion de la
commande
des décalages

93

Fig. 9

Champ de vecteurs-vitesse ——————— 12

Mémoire des
n vecteurs

101

$|Vx - V1x| \overset{>}{<} dV$

$|Vy - V1y| \overset{>}{<} dV$

101

$|Vx - V2x| \overset{>}{<} dV$

$|Vy - V2y| \overset{>}{<} dV$

101

$|Vx - Vnx| \overset{>}{<} dV$

$|Vy - Vny| \overset{>}{<} dV$

91

1

2

n

102

analyse des résultats
des comparaisons

104

103

Initialisation (i=0)

Mémoire au point ( x,y )
du code i
( i entier, entre 0 et n )

Fig. 10

21

103 — Mémoire du code i
au point ( x,y )

Image filtrée — 10

grad. x
grad. y — 13

validation si
code i(x,y)≠0
115

CVM

adresse

validation si  grad. x
ou        > seuil
grad. y

72

Cumul aux points
contour pour lesquels
le code i est non nul — 113

Cumul — 111

HISTOGRAMME
( mémoire
de taille n ) — 117

Nombre de points
contour  NCC — 112

+1 — 116

Nb. de points contour
ayant un vecteur NVC — 114

max. de l'histogramme
( voir phase 1 ) — 118

Mémoire :
valeur du max. MMAX
code correspondant KK — 119

Fig. 11

Fig. 12